Europäisches Patentamt

European Patent Office

Office européen des brevets

(19)

(11) **EP 0 483 530 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int Cl.$^6$: **H04N 5/217**, H04N 3/15

(21) Anmeldenummer: **91116657.7**

(22) Anmeldetag: **30.09.1991**

(54) **Verfahren und Vorrichtung zur Harmonisierung für Offset und Responsivität bei einem elektrooptischen Zeilen- oder Mosaikdetektor**

Method and device for offset and response harmonization in an electrooptical linear or mosaic sensor

Méthode et dispositif pour l'harmonisation du décalage et de la réponse dans un détecteur électro-optique linéaire ou mosaique

(84) Benannte Vertragsstaaten:
**DE FR GB IT**

(30) Priorität: **30.10.1990 DE 4034488**
**12.12.1990 DE 4039577**

(43) Veröffentlichungstag der Anmeldung:
**06.05.1992 Patentblatt 1992/19**

(73) Patentinhaber: **ELTRO GmbH Gesellschaft für Strahlungstechnik**
**D-69011 Heidelberg (DE)**

(72) Erfinder:
• **Wichmann, Günter**
**W-6000 Heidelberg (DE)**
• **Büchtemann, Wolf, Dr. Dipl.-Phys.**
**W-7400 Tübingen (DE)**

(74) Vertreter: **Frick, Gerhard, Dipl.-Ing.**
**Daimler-Benz Aerospace AG**
**Patente**
**Postfach 80 11 09**
**D-81663 München (DE)**

(56) Entgegenhaltungen:
EP-A- 0 122 351          WO-A-82/01275
WO-A-86/06214           FR-A- 2 573 263
GB-A- 2 140 649         GB-A- 2 149 605
JP-A- 2 206 976          US-A- 4 876 453

• PATENT ABSTRACTS OF JAPAN vol. 14, no. 434 (P-1107)18. September 1990
• PATENT ABSTRACTS OF JAPAN vol. 12, no. 65 (E-586)27. Februar 1988
• PATENT ABSTRACTS OF JAPAN vol. 13, no. 403 (P-929)7. September 1989

**Beschreibung**

Die Erfindung betrifft ein Verfahren zur Harmonisierung für Offset und Responsivität (= Empfindlichkeit, Gain) bei einem elektrooptischen Zeilen- oder Mosaikdetektor sowie eine Vorrichtung einmal zur Durchführung dieses Verfahrens sowie für eine allgemeine Mikroabtastung.

Die Erfindung ist vornehmlich aber nicht ausschließlich für Strahlungsempfänger nützlich, die im infraroten Spektralbereich (ca. 2 µm bis 14 µm) in Wärmebildgeräten eingesetzt sind. In diesem Spektralbereich sind aus physikalischen und technologischen Gründen bestimmte Detektormängel sehr viel kritischer als im Sichtbaren. Es sind dies namentlich Offset bzw. Unterschiede im Offset und Unterschiede in der Responsivität. Als Offset wird hier der Strom oder die Spannung bezeichnet, der bzw. die nicht von der Signalstrahlung hervorgerufen wird, gelegentlich auch als Dunkel- oder Leckstrom bzw. -spannung bezeichnet. Responsivität ist die Änderung von Strom oder Spannung als Funktion einer Änderung der Strahlung auf einen Detektor, wobei die Strahlungsänderung gemeinhin als proportional zur Temperaturänderung angenommen wird.

Die Harmonisierung kann in einer Ausformung der Erfindung unter Verwendung eines Mikroscans erfolgen. Ein solcher Mikroscan ist aus der Firmenzeitschrift "Kontron Bildanalyse, Prog. Res. 3000, Produktionsformation" vom Juni 1989, S. 2-15, bekannt. Auch hier können jeweils zwei Detektoren - bezogen auf den Bildbzw. Objektraum - identische Positionen einnehmen. Um die Auflösung des ursprünglichen Schwarz-Weiß-Bildes wieder herzustellen, werden unterschiedliche Farbinformationen übereinandergelegt. Daß eine solche "Staffelung" für eine Harmonisierung von Offset und Responsivität dienlich sein kann, darüber ist dieser Schrift nichts zu entnehmen.

Ein Detektorsystem, bei dem jedes der Elemente durch die Abtastbewegung eines Spiegels nacheinander vier Positionen einnimmt, die in etwa den Eckpunkten eines Rechtecks entsprechen - der einfachst denkbare Fall - ist z.B. aus der EP-A- 0 133 890 bekannt. Von Nachteil ist bei dieser Ausführungsform die ganz spezielle Festlegung auf nur vier Abtastpositionen. Die nutierende Bewegung des Spiegels verlangt außerdem eine kardanische Aufhängung, die vergleichsweise aufwendig ist.

Aus der DE-AS 22 24 275 ist es bekannt, durch zeitverzögerte Integration das Signal-Rauschverhältnis und die Homogenität eines Bildes zu verbessern. Durch die Addition (Integration) erfolgt aber lediglich eine statistische Mittelung der Signale und dadurch eine entsprechende Verbesserung der Eigenschaften in Bezug auf Rauschen und Homogenität. Auch in der DE 29 21 251 A1 und der DE 34 12 889 C2 erfolgt lediglich eine statistische Mittelung der Signale respektive ein Austausch der Detektorsignale. Von einer etwaigen Kompensationsmöglichkeit der Offsetspannung und der Responsivität ist auch hier nicht die Rede.

Aus WO-A-86 06 214 ist eine Einpunktkorrektur bekannt, welche es gestattet Unterschiede der Dunkelströme durch eine Relativbewegung zwischen Bild und Detektor zu bestimmen und den Wert zur Kompensation zu verwenden. Für ein Optimum der Detektorempfindlichkeit wird Tieftemperaturkühlung (auf "kryogene" Temperaturen) vorgesehen.

Aus der GB-A-2 140 649 ist es bekannt, zur Relativbewegung zwischen Bild und Detektor letzteren elektromagnetisch zu bewegen und so in Vibration zu versetzen, so daß gleiche Bildelemente nacheinander auf verschiedene Detektorelemente fallen. Damit werden Leerstellen im Bild wegen defekter Detektorelemente vermieden.

Für Fernsehkameras sind sodann im sichtbaren Bereich intgrierte Halbleiterdetektoren bekannt, die z.B. aus 580 x 700 Detektorelementen bestehen. Die Signalauslesung erfolgt mittels CCDs (charged coupled devices = Ladungskoppelelemente). Kennzeichnend für diese Art von Detektorelementen ist, daß jedes von ihnen einem Bildpunkt entspricht. Die Auflösung eines Bildes ist daher von der Zahl der Detektoren abhängig. Im Gegensatz hierzu verwendet man bei konventionellen Wärmebildgeräten wenige Detektorelemente, maximal etwa 100, die mittels mechanisch-optischer Verfahren über das Bildfeld geführt werden, so daß ein solcher Mosaikdetektor Signale von vielen Bildpunkten liefert. Die Erhöhung der Detektorzahlen auf Werte, die bei CCDs im Sichtbaren verwendet werden, stößt im Infraroten allerdings auf Kosten- und technologische Probleme. Speziell bei dem Detektormaterial HgCdTe (= Quecksilbercadmiumtellurid) sind diesbezüglich Mosaike von höchstens etwa 128 x 128 bis maximal 256 x 256 Detektorelementen vertretbar. Ein anderes Problem stellen die Detektorzwischenräume dar. Häufig fallen dieselben aus technologischen Gründen vergleichsweise groß aus, so daß viel Strahlung auch in diesen unempfindlichen Bereich fällt. Dadurch wird nicht nur die Empfindlichkeit der Anordnung reduziert, sondern es geht zusätzlich Information verloren, was zu einer Verfälschung des Bildes beiträgt. Dieses Phänomen ist unter der Bezeichnung "Aliasing" (= Verfremdung) bekannt.

Schließlich stören hier auch - viel stärker als im sichtbaren Bereich - unterschiedliche Dunkelströme bzw. -spannungen oder -ladungen sowie unterschiedliche Responsivitäten der Detektorelemente. Diesen Inhomogenitäten begegnet man beim augenblicklichen Stand der Technik durch eine aufwendige sogenannten Zweipunktkorrektur, bei der alle Detektorelemente nacheinander der Strahlung von zwei Referenzelementen unterschiedlicher Temperatur ausgesetzt werden.

Die Aufgabe der Erfindung wird in der Schaffung eines wenig aufwendigen, deterministischen Verfahrens zur Harmonisierung für Offsetspannungen und unterschiedliche Responsivitäten gesehen; auch kann diese Aufgabe mit der an sich bekannten Aufgabe der Beseitigung bzw. Reduzierung des Aliasing-Phänomens verknüpft werden. Diese Aufgabe wird erfindungsgemäß durch die Kennzeichnungsmerkmale des Anspruchs 1 gelöst. Mit einer vergleichsweise einfachen Vernetzung läßt sich eine szenen- (temperatur) bezogene deterministische Offsetkorrektur und Responsivitätsharmonisierung durchführen.

Weitere vorteilhafte Ausgestaltungen ergeben sich aus den Unteransprüchen.

Im folgenden werden an Hand einer Zeichnung Ausführungsbeispiele der Erfindung erläutert, wobei die in den einzelnen Figuren einander entsprechenden Figuren dieselben Bezugszahlen aufweisen. Es zeigt

Fig. 1a u. 1b     die unkompensierte Ausgangsspannung U zweier Detektoren 1 und 2, die unter anderem zwei identische Positionen 2' und 5' einnehmen,

Fig. 2     den Ausschnitt aus einem Detektormosaik und dessen Mikroscan zur Beseitigung von Aliasing (Fig. 2a) und zur Vernetzung (2b),

Fig. 3     eine Kombination der in Fig. 2a und Fig. 2b aufgezeigten Mikroscan-Möglichkeiten,

Fig. 4     die Ausgangsspannung von zwei Detektoren 1 und 2, deren Ausgangsspannungen für Position 2' resp. a extrapoliert werden,

Fig. 5a     die Anwendung eines konventionellen Zeilensprungs bei einem Zeilendetektor, bei Fig. 5b die erfindungsgemäße Vernetzung zur Harmonisierung von Offset Responsivität,

Fig. 6     die Ausgangssignale der Detektoren 1 und 2 für die Zeile 2'' von Fig. 5b,

Fig. 7     ein neuronales Netz zur Vernetzung dreier Detektoren,

Fig. 8     den Ausschnitt aus einem Mosaikdetektor mit der herkömmlichen, rechteckförmig nutierende Abtastbahn,

Fig. 9     Lagerung und Antrieb des Bildversatzmittels im erfindungsgemäßen System - perspektivisch dargestellt,

Fig. 10     eine Variante von Lagerung und Antrieb gemäß Fig. 9 und

Fig. 11     die Lagerung von einem Eckpunkt des Bildversatzmittels der Fig. 10 für sich in perspektivischer Sicht herausgezeichnet. Fig. 1a zeigt das Prinzip der Kompensation. Es zeigt die kompensierte Ausgangsspannung

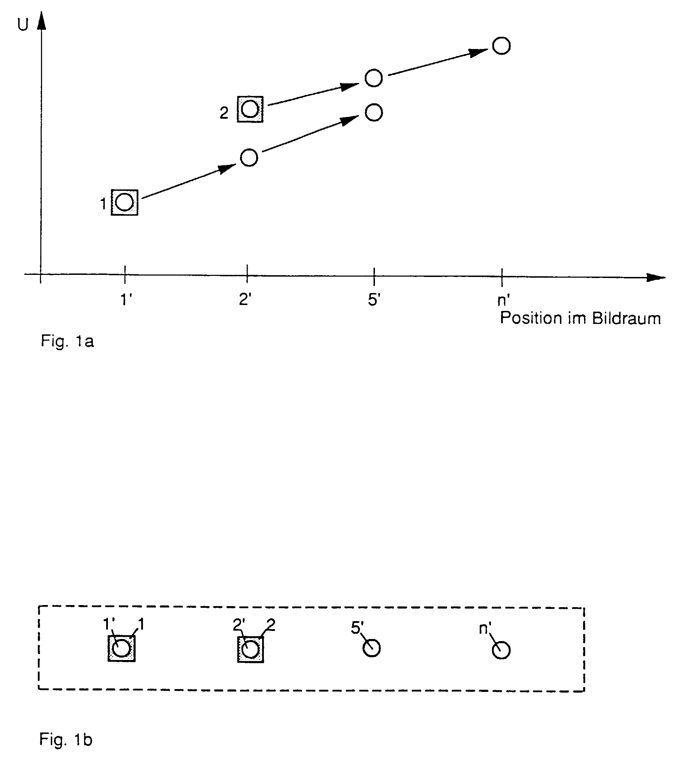

von zwei Detektoren 1 und 2, die gemäß Fig. 1b angeordnet sind. Detektor 1 wird von seiner Ruhestellung 1' zur Position 2' (der Ruhestellung von Detektor 2) und fakultativ zur Position 5' geführt. Detektor 2 wird dann seinerseits von Position 2' nach 5' (und fakultativ nach n' geführt). Die Szenenstrahlung (Temperatur) in Fig. 1 möge von links nach rechts zunehmen, so daß auch die Ausgangsspannungen der Detektoren zunehmen. Wegen der Detektorinhomogenitäten werden diese Ausgangsspannungen unterschiedlich sein. Nun erhalten aber die Detektoren in Position 2' denselben Betrag an Strahlung. Dadurch kann eine elektrische Kompensation der Ausgangsspannung erfolgen (Offsetkompensation). Bei der Bewegung von 2' nach 5' erfahren die Detektoren dieselbe Änderung der Strahlung. Dadurch kann eine Harmonisierung der Responsivität $R = \Delta U / \Delta T$ erfolgen. Dies setzt voraus, daß die Abtastung so schnell erfolgt, daß die Szenenstrahlung sich nicht merklich verändert hat, wenn die Detektoren die Positionen 2' resp. 5' einnehmen. Auf die Reihenfolge der Abtastung kommt es dann allerdings nicht an. Zur Harmonisierung des Offsets müssen also zwei Detektoren eine gemeinsame Position einnehmen, zur Harmonisierung von Offset und Responsivität sind zwei identische Positionen notwendig.

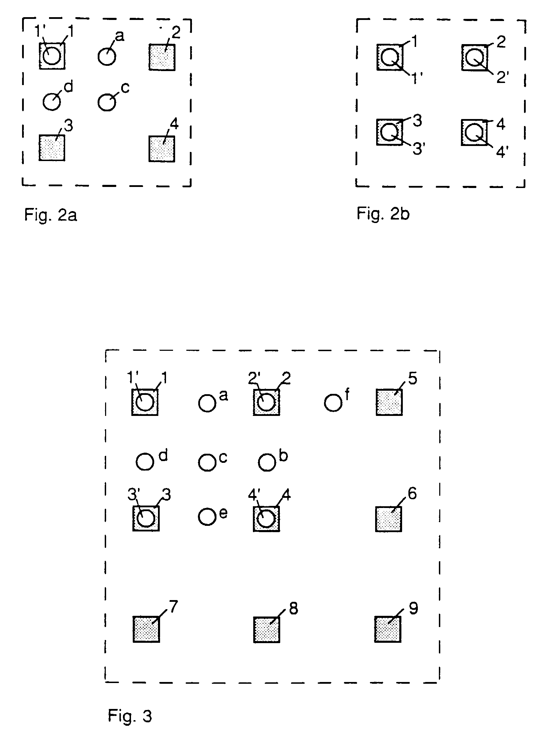

In Fig. 2a ist ein Ausschnitt von vier Detektorelementen 1 bis 4 aus einem Mosaikdetektor angenommen, bei dem ein konventioneller Zwei-mal-zwei-Mikroscan ausgeführt ist. Mittels optomechanischer oder anderer Maßnahmen nimmt hier das Detektorelement 1 nacheinander die Positionen 1', a, c und d an. Hierbei wird in den bekannten Anwendungen das Aliasing-Problem angegangen, indem die Positionen a, c und d in Zwischenräume zwischen die einzelnen Detektorelemente fallen.

Im Falle der Fig. 2b wird eine Vernetzung durchgeführt, die der Harmonisierung von Offset und Responsivität nach Fig. 1 dienen kann: Wenn Detektor 1 nacheinander die Positionen 1', 2' 4' und 3' einnimmt, so nimmt Detektor 2 unter anderem die Positionen 2' und 4' ein.

Fig. 3, die einen größeren Ausschnitt des Mosaiks gemäß Fig. 2 zeigt, demonstriert das Prinzip nach Fig. 2a und 2b, das heißt den konventionellen Mikroscan und die Vernetzung. Hier nimmt der Detektor 1 nacheinander z.B. die Positionen 1', a, 2', b, c, d, 3', e, 4' ein, wobei die mit den Buchstaben a bis e bezeichneten Positionen einen konventionellen Mikroscan zum Auffüllen der Zwischenräume bezeichnen, wohingegen die Positionen 1', 2' 3' und 4' der Vernetzung und somit der Harmonisierung von Offset und Reponsivität (Gain) dienen.

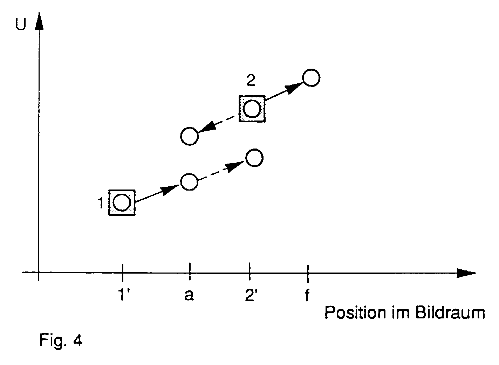

Auch mit dem konventionellen Abtastverfahren der Fig. 2a läßt sich mittels Extrapolation eine Harmonisierung von Offset und Responsivität durchführen, siehe Fig. 4. Bei Fig. 4 entspricht die geometrische Anordnung der Fig. 3: Wird Detektor 1 von Position 1' nach a geführt, so läßt sich wegen der geringen Ortsänderung die Spannung von Detektor 1 bei Position 2' mit guter Näherung durch lineare Extrapolierung vorhersagen. Dadurch ist aber eine Offsetharmonisierung mit Detektor 2 möglich. Der Fehler der Extrapolation wird noch geringer ausfallen, wenn die Harmonisierung durch Mittelung erfolgt, da - vorausgesetzt, daß die Szene nicht konstant bleibt - die Abweichungen von der Linearität im Mittel gleich Null sein werden.

In Fig. 4 wird die Spannung des Detektors 1 von a nach 2' extrapoliert. In Ähnlicher Weise kann eine Extrapolation der Spannung des Detektors 2 von Position 2' nach a erfolgen, so daß man - wenn auch extrapoliert - für zwei Detektoren die Ausgangsspannung für zwei identische Positionen ( a und 2') kennt. Damit ergibt sich wieder der Fall, daß die identische Änderung der Strahlung zur Harmonisierung der Responsivität von Detektor 1 und 2 herangezogen werden kann.

Maßgeblich für die Offsetkorrektur ist, daß jeweils zwei Detektoren den identischen Betrag an Strahlung erhalten. Dies kann auch durch Defokussierung erfolgen. Dadurch erhält man eine vom Grad der Defokussierung abhängige Mittelung über einen gewissen Bereich der Szene, die dem Szeneninhalt angepaßt sein kann. Wählt man nun eine zweite Stellung der Defokussierung, so wird man ein Strahlungsfeld erzeugen, das einem Mittelwert entspricht, der sich aber vom erstgenannten Mittelwert unterscheiden wird. Dadurch erhält man wieder eine bei benachbarten Detektoren identische Änderung der Strahlung und kann somit die Responsivität (Gain) harmonisieren.

Zweckmäßigerweise ermittelt man in allen genannten Fällen die Kompensationsspannungen durch Mittelwertbildung aus vielen Messungen. Die Mittelung gewährleistet, daß die Harmonisierungsspannungen bzw. Harmonisierungskoeffizienten im Grenzfall nicht vom Rauschen der Detektoren beeinträchtigt werden. Da sich von einem Bild zum nächsten die Harmonisierung nur wenig ändert, wird sich dadurch auch das Rauschen des Systems nur unwesentlich erhöhen. Schließlich wird dadurch gewährleistet, daß die Kompensation bei plötzlichen Änderungen, z.B. dem Aufleuchten eines Punktobjektes, nicht das Nutzsignal wegkompensiert.

Bei einem wenig stabilen System wird die Harmonisierung laufend zu erfolgen haben (laufendes Mittel). Bei stabileren Systemen muß dieser Abgleich nur gelegentlich, z.B. beim Einschalten erfolgen. Es ist auch denkbar, daß die Responsivität nur beim Einschalten harmonisiert wird, während der Offset kontinuierlich abgeglichen wird.

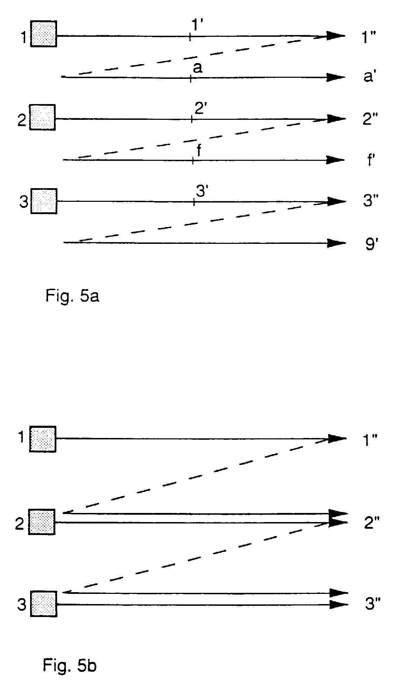

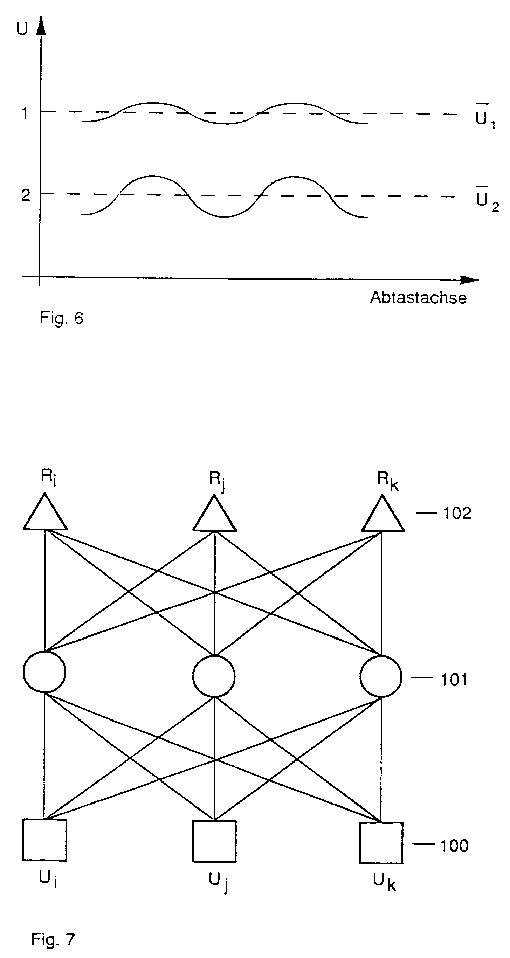

Fig. 5a zeigt bei einem Zeilendetektor ein konventionelles Zeilensprungverfahren (Interlace), bei dem Detektor 1 nach Durchlaufen der Zeile 1'' auch die Zeile a' zwischen der Ruhestellung von Detektor 1 und 2 abtastet. Fig. 5b zeigt die Anwendung des erfindungsgemäßen Verfahrens: Hierbei tastet der Detektor 1 die Zeile 1'' und die Zeile 2'' ab, Detektor 2 die Zeilen 2'' und 3''. Fig. 6 zeigt beispielhaft die Ausgangssignale der Detektoren 1 und 2 für die Zeile 2''. Wegen unterschiedlicher Dunkelströme sind die Mittelwerte der Detektorspannungen $U_1$ und $U_2$ unterschiedlich, können aber entsprechend dem erfindungsgemäßen Verfahren kompensiert werden, da die gleiche Szenenstrahlung vorliegt. Wegen der unterschiedlichen Responsivitäten werden auch die Abweichungen vom Mittelwert unterschiedlich sein. Durch Ermittlung der Schwankungen um besagten Mittelwert, z.B. der Messung des Effektivwertes der Wechselspannungskomponente (RMS-Wert), lassen sich auch diese Ungleichheiten kompensieren.

Die Harmonisierung von Offset und Responsivität läßt sich auch beim konventionellen Zeilensprung (Fig. 5a) durch Extrapolation erzielen. Die Erklärung des Prinzips ist ganz analog zur Fig. 4 bzw. den zugehörigen Erläuterungen, wenn man in den Zeilen 1'', a', 2'' und f' korrespondierende Positionen 1', a, 2', f (längseiner Spalte) herausgreift.

Bei parallel abtastenden Systemen (entsprechend der Fig. 5) wird üblicherweise ein Spiegel zur Abtastung verwendet. Normalerweise arbeiten diese Systeme unidirektionell, d.h. mit dem Spiegel wird die Szene zur Bildgewinnung z.B. von links nach rechts abgetastet, die Rückführung des Spiegels in die Ausgangslage (von rechts nach links) wird nicht zur Bildgewinnung verwendet, u.a. da bei Detektoranordnungen mit TDI (zeitverzögerte Integration) dieses TDI nur in einer Richtung zu einem sinnvollen Bildaufbau führt. Führt man die elektrische Integration beim Spiegelrücksprung trotzdem durch, so werden die integrierten Signale nicht von identischen Bildpunkten stammen, vielmehr wird das Ausgangssignal der Mittelwert mehrerer, jedoch nahe zusammenliegender Punkte sein. Außerdem wird bei einer gegebenen Integrationszeit eines Detektors dieser Detektor wegen der schnelleren Winkelbewegung des Spiegels die Signale über einen größeren räumlichen Bereich als bei der Hinbewegung integrieren (mitteln). Dies ist für eine Harmonisierung jedoch nicht schädlich, da man beide oben erwähnten Mittelungen rechnerisch für das Signal einer Vorwärtsbewegung nachbilden kann, so daß man für die Zwecke der Harmonisierung die Signale zweier Detektoren, die einmal während der Hinbewegung, das anderemal während der Spiegelrückbewegung gewonnen wurden, direkt vergleichen kann.

Zwei Varianten sind hier denkbar:

1. Beim Rücksprung des Spiegels wird der Detektor 1 auf die Zeile 2'' geführt, siehe Fig. 5b.
2. Beim Rücksprung des Spiegels wird das Bild definiert defokussiert.

Die vorliegenden Möglichkeiten setzen Linearität des Systems im Rahmen der Meßgenauigkeit voraus. Im realen Fall können deutliche Abweichungen hiervon auftreten (z.B. bei Feuern). Für diesen Fall lassen sich angepaßte Algorithmen ableiten; der Erfolg neuronaler Netze bei nichtlinearen funktionellen Abhängigkeiten legen es nahe, solche Verfahren hier anzuwenden. Weiterhin haben neuronale Netze bei der Erkennung von Strukturen große Erfolge, so daß damit bei der Harmonisierung z.B. Kanten im Bild berücksichtigt werden können.

Fig. 7 enthält ein einfaches Beispiel eines neuronalen Netzwerks für die Harmonisierung : $U_i$, $U_j$, $U_k$ sind Spannungen von Detektoren 100, die in einer Zwischenschicht 101 verknüpft werden und am Ausgang harmonisierte Responsivitäten $R_i$, $R_j$, $R_k$ 102 liefern.

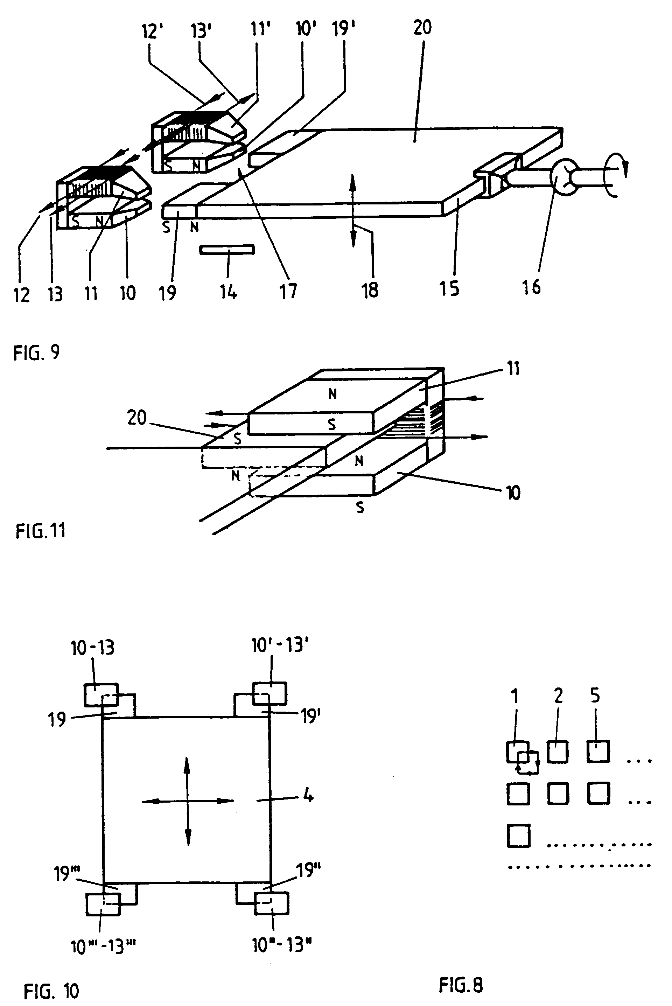

Fig. 8 zeigt einen Ausschnitt aus einem Mosaikdetektor, bei dem das Bildversatzmittel 20 (Fig. 9),z.B. ein Abtastspiegel oder eine durchsichtige Platte, mit Hilfe elektromagnetischer Kraft, die entsprechend der rechteckförmigen Abtastschleife nutierende Bewegung ausführt, was Stand der Technik ist. Die nachfolgenden Figuren zeigen nun einige Ausführungsbeispiele, mit denen die vorbeschriebenen Harmonisierungs- bzw. Mikroabtastvorgänge möglich sind. Selbstverständlich sind auch noch andere Möglichkeiten denkbar, ohne daß dadurch der Rahmen der Erfindung verlassen würde.

Aus Fig. 9 ist ersichtlich, daß das Bildversatzmittel 20 an seiner in Blickrichtung rechten Stirnseite 15 mittels eines Kugellagers 16 mittig gehaltert ist. Bei anderen zeichnerisch nicht wiedergegebenen Ausführungsbeispielen sind für die Halterung auch Gelenke, Torsionsstäbe, Torsionsfedern u.ä. denkbar, ohne daß dadurch der Rahmen der Erfindung verlassen würde. In jedem dieser Fälle muß aber die Lagerung oder Aufhängung so erfolgen, daß sich das Bildversatzmittel sowohl um die durch den Befestigungspunkt verlaufende Symmetrieachse verdrehen als auch in der zu dem Bildversatzmittel senkrechten Ebene kippen läßt.

In den Eckbereichen der gegenüberliegenden Stirnseite 17 ist sodann je ein speziell ausgebildetes magnetisches Antriebs- und Positionierungsmagnetsystem 19-13 bzw. 19'-13' vorgesehen, das Gegenstand der nachfolgenden Beschreibung ist: An dem Spiegel bzw. der durchsichtigen Platte sind in diesen Bereichen je ein Permanetmagnet 19 bzw. 19' befestigt, deren freies Ende z.B. den Südpol darstellen soll. Bei einem anderen zeichnerisch nicht dargestellten Ausführungsbeispiel ist es auch möglich die Spiegelecken selbst als Permanentmagnete auszubilden oder sie mit einer magnetischen Sicht zu umhüllen. Diesen Südpolen gegenüber liegt z.B. je ein im wesentlichen U-Form aufweisendes Gebilde, dessen Schenkel 10 bzw. 10' ebenfalls ein Permanentmagnet ist, einen Pohlschuh aus Weicheisen besitzt und entsprechend als Nordpol fungiert. Der Schenkel 11 bzw. 11' dagegen besteht aus einem Elektromagneten mit den beiden Spulen 12 und 13 bzw. 12' und 13'. Wird Schenkel 11 bzw. 11' über die Erregerspule 12 und einen entsprechenden Stromfluß so magnetisiert, daß seine Kräfte bei gleicher Polarität gleich stark wie jene des Schenkels 10 bzw. 10' sind, so nehmen das Bildversatzmittel 20 und seine beiden Magnete 19 und 19' eine Mittelstellung zwischen den beiden Schenkeln 10 und 11 ein. Wird dagegen der Strom in der Spule 12 bzw. 12' stärker oder schwächer, nehmen Bildversatzmittel und Magnete eine entsprechend außermittige Stellung ein, das heißt dieselben finden dann ihre Ruhelage etwas mehr in Richtung der Schenkel 10 oder 11 bzw. 10' oder 11'.

Werden beide Elektromagnete 11/12 und 11'/12' gleichpolig erregt, so bewegt sich das Bildversatzmittel 20 mit seinem magnetseitigen Ende in Richtung Doppelpfeil 18 auf und nieder, was auch als Kippbewegung bezeichnet wird. Erregt man die Magnete dagegen gegensinnig, so dreht sich das Bildversatzmittel um die durch seinen Befestigungspunkt 16 verlaufende Symmetrieachse. Die beiden Antriebskreise für Dreh- und Kippbewegung lassen sich durch Inbetriebnahme der zweiten Spule 13 bzw. 13' trennen, wobei Spule 12 von Schenkel 11 mit Spule 12' von Schenkel 11' gleichsinnig und Spule 13 mit Spule 13' gegensinnig erregt werden. Um eventuelle überschwingungen zu vermeiden, die durch Eigenresonanzen hervorgerufen werden, und/oder das Bildversatzmittel 20 in einer mittleren Ausgangslage zu halten,kann es sich als zweckmäßig erweisen, den Spiegel- bzw. Plattenausschlag durch geeignete Maßnahmen zu dämpfen bzw. entsprechend mit Federn 14 festzuhalten. Mit einem solchen System lassen sich nahezu beliebig viele, jedenfalls alle realistisch möglichen Mikroscanpositionen einstellen, und zwar entsprechend dem Wert und Umfang der Erregerströme. Selbstverständlich können durch Verwendung zusätzlicher Positionssensoren auch geregelte elektronische Antriebskreise vorgesehen werden, wobei durch Soll-Ist-Vergleich die gewünschten Hübe für längere Drehbewegungen genau vorgegeben werden können.

Ein anderes Ausführungsbeispiel der Erfindung zeigt Fig. 10. Derselben ist zu entnehmen, daß das Bildversatzmittel 20 auch mit allen vier Ecken bzw. über entsprechende Permanentmagnete 19 bis 19''' in magnetischen Antriebs- und Positionierungsmagnetsystemen 10, 11, 12, 13, bis 10''', 11''', 12''', 13''' gelagert sein kann. Auch in diesem Fall kann durch die vorstehend beschriebene Ansteuerung - jetzt aller acht Spulen 12, 13 bis 12''', 13''' - eine Nutations- oder Taumelbewegung des Spiegels bewirkt werden. In Fig. 11 ist hierbei die Lagerung eines Eckpunktes für sich und in vergrößertem Maßstab herausgezeichnet, wobei auch ersichtlich ist, daß der maximale "Hub" der Nutations- oder Taumelbewegung durch den Abstand des Spiegels zu den beiden Schenkeln bestimmt wird.

**Patentansprüche**

1. Verfahren zur Harmonisierung für unterschiedliche Dunkelströme und unterschiedliche Responsivitäten bei einem elektrooptischen Zeilen- oder Mosaikdetektor, **dadurch gekennzeichnet**, daß

wenigstens jeweils zwei Detektoren (1;2) zur Zweipunktkorrektur schnell nacheinander einer aus der Szene abgeleiteten, möglichst identischen Strahlung und einer möglichst identischen Änderung der Strahlung ausgesetzt werden.

2. Verfahren nach Anspruch 1, **dadurch gekennzeichnet**, daß die Detektoren (1; 2) - in Form einer echten Überlappung - auf eine oder mehrere identische Positionen geführt werden oder die Ausgangsspannungen für eine oder mehrere identische Positionen durch lokale Bewegung der Detektoren - in Form einer extrapolierten Überlappung - extrapoliert werden oder wenigstens eine Defokussierung getätigt wird.

3. Verfahren nach Anspruch 1, **dadurch gekennzeichnet**, daß Kompensationsspannungen durch Mittelung mehrerer Messungen gewonnen werden.

4. Verfahren nach einem der Ansprüche 1 bis 3. **dadurch gekennzeichnet**, daß ohne eine Temperaturreferenz durch bloße Auswertung der Szenentemperatur, z.B. die Ermittlung einer mittleren Szenentemperatur, harmonisiert wird.

5. Verfahren nach einem der Ansprüche 1 bis 3, **dadurch gekennzeichnet**, daß mit Hilfe einer oder mehrerer Temperaturreferenzen am Rande des Bildfeldes harmonisiert wird.

6. Verfahren nach einem der vorausgehenden Ansprüche, **dadurch gekennzeichnet**, daß bei wenig stabilen Systemen laufend und bei stabileren nur gelegentlich, z.B beim Einschalten des Systems, kompensiert wird und/oder die Responsivität nur beim Einschalten und der Offset kontinuierlich harmonisiert bzw. kompensiert wird.

7. Verfahren nach einem der vorausgehenden Ansprüche, das **gekennzeichnet** ist durch seine Verwendung bei einem an sich bekannten Wärmebildgerät dessen Mosaikdetektor sich aus spalten- und zeilenförmig angeordneten Detektorelementen mit gleicher gegenseitigen Abständen zusammensetzt und bei dem für eine elektrooptische Bildinformation hoher Bildauflösung das Bild mit Bildversatzmitteln (20), nach Art einer sog. Mikroabtastung relativ zum Mosaikdetektor, und zwar zeilenförmig oder nach Art einer geschlossenen Abtastschleife nutierend bewegt wird.

8. Verfahren nach Anspruch 7, **dadurch gekennzeichnet**, daß mit Hilfe des Mikroscans jedes Detektorelement (1; 2; 3; 4 bis n) entweder nur über die auf seinem Abtastweg aufeinander folgenden Positionen (1'; 2'; 3'; 4' bis n') der Detektorelemente in der Umgebung des jeweiligen Detektorelements oder aber über diese Positionen jeweils alternierend mit den entsprechenden Zwischenräumen (a bis e) geführt wird.

9. Verfahren nach Anspruch 7 und 8, **dadurch gekennzeichnet**, daß bei einer zeilenförmigen Abtastbewegung von jedem Detektor (1 bis n) außer seinen eigenen Zeilen (1" bis n") auch noch jeweils die auf ihn folgende Zeile (2" bis n" + 1) abgetastet wird.

10. Verfahren nach Anspruch 8 und 9, **dadurch gekennzeichnet**, daß beim Rücksprung des Bildversatzmittels in seine Ausgangslage zum Zweck der Harmonisierung der Signale zweier Detektoren (1; 2) entweder der Detektor (1) auf die folgende Zeile (2") geführt oder aber das Bild definiert defokussiert wird.

11. Verfahren nach einem der vorausgehenden Ansprüche, **dadurch gekennzeichnet**, daß bei unerwünschter Nichtlinearität angepaßte Algorithmen eingesetzt werden.

12. Vorrichtung zur Durchführung des Verfahrens nach einem der vorausgehenden Ansprüche 7-11 und zur Realisierung unterschiedlichster Mikroabtastungen, **dadurch gekennzeichnet**, daß entweder das Bildversatzmittel (20) an seinen vier Ecken jeweils zwischen den Schenken (10 und 11 bis 10''' und 11''') eines um seinen zentralen Schwerpunkt gruppierten magnetischen Antriebs- und Positionierungssystems (19, 10, 11, 12, 13 bis 19''', 10''', 11''', 12''', 13''') mit einem den maximalen Ausschlag der Nutationsbewegung bestimmenden Abstand angeordnet ist
oder
das Bildversatzmittel (20) mit den zwei Ecken seiner einen Stirnseite (17) dem magnetischen Antriebs- und Positionierungssystem (19, 10, 11, 12, 13 bzw. 19'. 10', 11', 12', 13') gegenüberliegend angeordnet und die andere Stirnseite (15) mittig so gelagert oder aufgehängt ist, daß das Bildversatzmittel bei eingeschaltetem Antriebs- und Positionierungssystem um die durch den Lagerpunkt verlaufende Symmetrieachse drehbar und in der senkrecht hierzu verlaufenden Ebene kippbar ist.

13. Vorrichtung nach Anspruch 12, **dadurch gekennzeichnet**, daß das magnetische Antriebs- und Positionierungssystem (19, 10, 11, 12. 13 bis 19''', 10''', 11''', 12''', 13''') im wesentlichen U-Form aufweist, deren einer Schenkel (10 bis 10''') als Permanentmagnet mit einem Weicheisen-Polschuh und deren anderer Schenkel (11 bis 11''') als Elektromagnet mit zwei elektrisch getrennten Erregerspulen (12, 13 bis 12''', 13''') ausgebildet ist.

14. Vorrichtung nach Anspruch 12 und 13, **dadurch gekennzeichnet**, daß das Bildversatzmittel (20) an seiner einen Stirnseite (15) mittels Kugellager (16), Torsionsstab oder Torsionsfeder gehaltert oder aufgehängt ist.

15. Vorrichtung nach einem der vorausgehenden Ansprüche 12-14 **dadurch gekennzeichnet**, daß wenigstens an den beiden Ecken der einen Stirnseite (17) Permanentmagnete (19;19') angeformt, diese Ecken selbst als Permanentmagnete ausgebildet oder mit einer magnetischen Schicht umhüllt sind.

16. Vorrichtung nach einem der vorausgehenden Ansprüche 12-15 **dadurch gekennzeichnet**, daß Bildversatzmittel(20) aus einem abbildenden System z.B. einem Spiegel, einer durchsichtigen Platte oder Linse besteht.

17. Vorrichtung nach einem der vorausgehenden Ansprüche 12-16 **dadurch gekennzeichnet**, daß das Bildversatzmittel(20)durch leicht nachgiebige Mittel, z.B. Federn (14), in bezug auf das Antriebs- und Positionierungssystem (19, 10, 11, 12, 13 bis 19''', 10''', 11''', 12''', 13''') in einer Mittellage als Ausgangslage gehalten wird.

18. Vorrichtung nach einem der vorausgehenden Ansprüche 12-17 **dadurch gekennzeichnet**, daß das Bildversatzmittel (20) bzw. seine Bewegung durch Dämpfungsmaterial (14) bedämpft wird.

**Claims**

1. Method for harmonization of differing dark currents and differing responsiveness in an electro-optical linear or mosaic detector, **characterized in that** at least two respective detectors (1; 2) are, for a two-point correction, in rapid succession exposed to both an if possible identical radiation diverted from the scene and an if possible identical change in the radiation.

2. Method according to Claim 1, **characterized in that** the detectors (1; 2) are, in the form or real overlap, guided to one or more identical positions, or the output voltages for one or more identical positions are extrapolated by localized movement of the detectors, in the form of extrapolated overlap, or at least defocussing is carried out.

3. Method according to Claim 1, **characterized in that** compensation voltages are obtained by averaging a plurality of measurings.

4. Method according to one of Claims 1 to 3, **characterized in that** harmonization is carried out without temperature reference by mere evaluation of the scene temperature, i.e. by determining a mean scene temperature.

5. Method according to one of Claims 1 to 3, **characterized in that** harmonization is carried out with the aid of one or more temperature references on the edge of the image field.

6. Method according to one of the above claims, **characterized in that** compensation is carried out, for example when switching on the system, and/or the responsiveness is harmonized or compensated only during switch on, and the offset is continuously harmonized or compensated, which is carried out continuously in systems of lesser stability and occasionally in stable systems.

7. Method according to one of the above claims, **characterized by** its use with a previously known heat-imaging apparatus the mosaic detector of which is composed of detector elements arranged in columns and lines with identical opposing gaps and in which, for electro-optical image information of high image resolution, the image is nutatingly moved with image transposition means (20) in the manner of a so-called micro probe relative to the mosaic detector, i.e. in lines or like a closed probe loop.

8. Method according to Claim 7, **characterized in that** each detector element (1; 2; 3; 4 to n) is guided with the aid of a microscan either only over successive positions (1'; 2'; 3'; 4' to n') of the detector elements on its scan path in the vicinity of a respective detector element or alternatingly over these positions with respective gaps (a to e) thereinbetween.

9. Method according to Claim 7 and 8, **characterized in that** with a lineshaped probe movement of each detector (1 to n) both its own lines (1" to n") and its successive line (2" to n" + 1) is scanned.

10. Method according to Claim 8 and 9, **characterized in that** when the image transposition means jumps back into its initial position for the purpose of harmonizing the signals of two detectors (1; 2), either detector (1) is guided onto the following line (2") or the image is defined defocussed.

11. Method according to one of the above claims, **characterized in that** adapted algorithms are applied in the event of an undesired non-linearity.

12. Device for carrying out the method according to one of the above claims and for realizing vastly different micro probes, **characterized in that**

either

the image-transposition means (20) is positioned at its four corners between the respective shanks (10 and 11 to 10''' and 11''') of a magnetic drive and positioning system (19, 10, 11, 12, 13 to 19''', 10''', 11''', 12''', 13''') grouped around its centre of mass at a distance which determines the maximum deflection of the nutational movement

or

the image-transposition means (20) is positioned with the two corners of its one end (17) opposite the magnetic drive and positioning system (19, 10, 11, 12, 13 or 19', 10', 11', 12', 13'), and the other end (15) is centrally mounted or suspended in such a manner that the image-transposition means, with the drive and positioning system switched on, is rotatable around the axis of symmetry which extends through the mounting point and tiltable in a thereto vertically extending plane.

13. Device according to Claim 12, **characterized in that** the magnetic drive and positioning system (19, 10, 11, 12, 13 to 19''', 10''', 11''', 12''', 13''') is essentially U-shaped, the one shank (10 to 10''') being designed as a permanent magnet with a soft-iron pole-shoe and the other shank (11 to 11''') being designed as an electromagnet with two electrically separated exciter coils (12, 13 to 12''', 13''').

14. Device according to Claim 12 and 13, **characterized in that** the image-transposition means (20) is held or suspended at its one end (15) by means of a ballbearing (16), torsion bar or torsion spring.

15. Device according to one of the above claims 12 - 14, **characterized in that** at least at the two corners of the one end (17) permanent magnets (19, 19') are formed on, and these corners are themselves permanent magnets or encased in a magnetic layer.

16. Device according to one of the above Claims 12 - 15, **characterized in that** the image-transposition means (20) is composed of an imaging system, for example a mirror, a permeable plate or lens.

17. Device according to one of the above Claims 12 - 16, **characterized in that** the image-transposition means (20) is held relative to the drive and positioning system (19, 10, 11, 12, 13 to 19''', 10''', 11''', 12''', 13''') in a central position as an initial position by extremely resilient means, for example springs (14).

18. Device according to one of the above Claims 12-17, **characterized in that** the image-transposition means (20) or its movement is damped by damping material (14).

**Revendications**

1. Procédé pour harmoniser des courants d'obscurité et des gains différents dans un détecteur électro-optique de type barrette ou de type mosaïque, caractérisé par le fait qu'à chaque fois au moins deux détecteurs (1; 2) sont exposés rapidement l'un après l'autre, à des fins de correction deux points, à un rayonnement le plus identique possible et à une variation de rayonnement la plus identique possible dérivés de la scène.

2. Procédé selon la revendication 1, caractérisé par le fait que les détecteurs (1; 2) sont amenés - sous forme de recouvrement parfait - sur une ou plusieurs positions identiques ou que les tensions de sortie pour une ou plusieurs positions identiques sont extrapolées - sous forme de recouvrement extrapolé - par des déplacements localisés des détecteurs ou qu'au moins une défocalisation est opérée.

3. Procédé selon la revendication 1, caractérisé par le fait que les tensions de compensation sont obtenues par calcul de la moyenne de plusieurs mesures.

4. Procédé selon l'une des revendications 1 à 3, caractérisé par le fait que, sans référence de température, l'harmonisation est réalisée par simple exploitation de la température de la scène, par exemple la détermination d'une température moyenne de scène.

5. Procédé selon l'une des revendications 1 à 3, caractérisé par le fait que l'harmonisation est réalisée à l'aide d'une ou de plusieurs références de température sur le bord du champ d'image.

6. Procédé selon l'une des revendications précédentes, caractérisé par le fait que la compensation est opérée en continu dans le cas de système peu stables et seulement de manière épisodique dans le cas de système plus stables, par exemple à la mise sous tension du système, et/ou le gain est harmonisé ou compensé seulement à la mise sous tension et le décalage est harmonisé ou compensé de manière continue.

7. Procédé selon l'une des revendications précédentes, caractérisé par son utilisation dans un appareil à imagerie thermique connu en soi dont le détecteur mosaïque se compose d'éléments de détecteur disposés en colonnes et en rangées avec un espacement mutuel constant et dans lequel, pour obtenir une information d'image électro-optique avec une haute résolution, l'image est déplacée par des moyens (20) de décalage d'image par lignes par rapport au détecteur mosaïque en une sorte de micro-balayage ou avec un mouvement de nutation en une sorte de boucle de balayage fermée.

8. Procédé selon l'une des revendications précédentes, caractérisé par le fait que par le micro-balayage, chaque élément de détecteur (1; 2; 3; 4 à n) est amené soit seulement sur les positions successives (1'; 2'; 3'; 4' à n') sur sa course de balayage des éléments de détecteurs situés dans la région de l'élément de détecteur concerné, soit sur les espaces (a à e) concernés qui alternent avec des positions.

9. Procédé selon les revendications 7 et 8, caractérisé par le fait que dans le cas d'un mouvement de balayage en ligne, chaque détecteur (1 à n) balaie, en plus de ses propres lignes (1" à n"), la ligne (2" à n"+1) qui le suit.

10. Procédé selon les revendications 8 et 9, caractérisé par le fait que, lors du retour du moyen de décalage d'image dans sa position initiale, aux fins d'harmoniser les signaux de deux détecteurs (1; 2), soit on amène le détecteur (1) sur la ligne suivante (2"), soit on défocalise de manière ciblée l'image.

11. Procédé selon l'une des revendications précédentes, caractérisé par le fait que dans le cas d'un défaut de linéarité non voulu, on applique des algorithmes adaptés.

12. Dispositif pour la mise en oeuvre du procédé selon l'une des revendications précédentes et pour la réalisation de micro-balayages très divers, caractérisé par le fait que
soit le moyen de décalage (20) d'image est disposé au niveau de ses quatre angles entre les bras (10 et 11 à 10'" et 11'") d'un système d'entraînement et de positionnement (19, 10, 11, 12, 13 à 19'", 10'", 11'", 12'", 13'") magnétique groupé autour de son centre de gravité avec une distance qui détermine l'amplitude maximale du mouvement de nutation, soit le moyen de décalage (20) d'image est disposé par les deux angles de l'une de ses faces frontales (17) en regard du système d'entraînement et de positionnement (19, 10, 11, 12, 13 à 19'", 10'", 11'", 12'", 13'") magnétique et l'autre face frontale (15) est supportée ou suspendue en son milieu de telle sorte que le moyen de décalage (20) d'image, lorsque le système d'entraînement et de positionnement est en service, puisse tourner autour de l'axe de symétrie passant par le point d'articulation et pivoter dans le plan perpendiculaire à ce dernier.

13. Dispositif selon la revendication 12, caractérisé par le fait que le système d'entraînement et de positionnement (19, 10, 11, 12, 13 à 19'", 10'", 11'", 12'", 13'") magnétique a sensiblement une forme de U dont une branche (10 à 10'") est agencée sous forme d'aimant permanent avec un pôle en fer doux et dont l'autre branche (11 à 1'") est agencée en électroaimant avec deux bobines d'excitation (12, 13 à 12'", 13'") séparées électriquement.

14. Dispositif selon les revendications 12 et 13, caractérisé par le fait que le système de décalage (20) d'image est supporté ou suspendu au niveau de l'une de ses faces frontales (15) à l'aide de roulements à billes (16), de barres de torsion ou de ressorts de torsion.

15. Dispositif selon l'une des revendications précédentes 12 à 14, caractérisé par le fait que des aimants permanents (19, 19') sont aménagés au moins dans les deux angles de l'une des faces frontales (17), que les angles sont eux-mêmes réalisés sous forme d'aimants permanents ou qu'ils sont entourés d'une couche magnétique.

16. Dispositif selon l'une des revendications précédentes 12 à 15, caractérisé par le fait que le système de décalage (20) d'image se compose d'un système optique, par exemple un miroir, une plaque transparente ou une lentille.

17. Dispositif selon l'une des revendications précédentes 12 à 16, caractérisé par le fait que le système de décalage (20) d'image est maintenu par des moyens présentant une grande souplesse, par exemple des ressorts (14), dans une position médiane en tant que position d'origine par rapport au système d'entraînement et de positionnement (19, 10, 11, 12, 13 à 19'", 10'", 11'", 12'", 13'").

18. Dispositif selon l'une des revendications précédentes 12 à 17, caractérisé par le fait que le système de décalage (20) d'image ou son mouvement est amorti par un matériau d'amortissement (14).

Fig. 1a

Fig. 1b

Fig. 2a

Fig. 2b

Fig. 3

Fig. 4

Fig. 5a

Fig. 5b

Fig. 6

Fig. 7

FIG. 9

FIG.11

FIG. 10

FIG.8